# EUROPÄISCHE PATENTANMELDUNG

(11) **EP 0 902 409 A2**
(43) Veröffentlichungstag der Anmeldung: **17.03.1999**
(21) Anmeldenummer: 98116294.4
(22) Anmeldetag: 28.08.1998
(51) Int. Cl.: G09F 5/00

(54) **Vorrichtung in Form einer Verkaufshilfe für Möbel, insbesondere Küchenmöbel**

(30) Priorität: 10.09.1997 DE 19739572
(71) Anmelder: Grimm, Ferdinand, 93049 Regensburg (DE)
(72) Erfinder: Grimm, Ferdinand, 93049 Regensburg (DE)
(74) Vertreter: Wasmeier, Alfons, Dipl.-Ing.

(57) **Zusammenfassung**

Es wird eine Vorrichtung zum Darstellung bzw. Nachbilden von Möbeln, vorzugsweise Küchenmöbeln und Küchenmöbelteilen vorgeschlagen, bei der die Möbel in Form von Schränken, Einbaugeräten, Arbeitsplatten usw. in Form, Aussehen und Abmessungen als den echten Möbeln angepaßte individuelle, dreidimensionale, zusammenlegbare Attrappen ausgebildet sind. Auf diese Weise ist es möglich, in einfacher und kosten-günstiger Weise und im Maßstabsverhältnis von 1:1 möglichst naturgetreu ein genaues Abbild einer Küche zu vermitteln und eine beliebige Kombination der Möbelteile z.B. in einem Ausstellungsraum darzustellen.

## Beschreibung

Die Erfindung bezieht sich auf eine Vorrichtung nach dem Oberbegriff des Anspruches 1.

Aus der US 14 58 975 ist eine Vorrichtung bekannt, mit der ein Zimmer perspektivisch dargestellt wird, in das Möbelattrappen eingelegt werden. Die Zimmerdarstellung sowie die Möbelattrappen sind verkleinerte, im wesentlichen flache zweidimensionale Materialien, die durch die perspektivische Darstellung einen dreidimensionalen Eindruck erwecken.

In ähnlicher Weise ergibt sich aus der DE 40 26 715 A1 ein Warenkatalog, insbes. Möbelkatalog, dem Gestaltungshilfen beigegeben werden, bei denen es sich um ein dreidimensionales Modell eines Zimmers und um zweidimensionale Darstellungen von Möbeln handelt, wobei sowohl Zimmer als auch Möbel maßstäblich verkleinert dargestellt sind.

Aus der US 50 50 326 ist des weiteren eine Vorrichtung bekannt, bei der Displays aus Dosen simuliert werden, die im Maßstab 1:1 verwendet werden. Eine derartige Vorrichtung hat die Aufgabe, im Original schwere und aufwendig zu plazierende Objekte einfach und leicht handhaben zu können. Eine derartige Vorrichtung ist jedoch in der Formgebung räumlich fixiert und nicht zusammenlegbar, so daß das Problem der Platzersparnis hier entfällt.

In den Verkaufsstätten für Möbel, insbesondere für Küchen und vorzugsweise Einbauküchen, z.B. in Studios, tritt in der Regel das Problem auf, daß der Kunde bzw. die Kundin die eigene Traumküche in natura sehen will, d.h. im häuslichen Küchenzimmer, in der Wunschzusammenstellung mit Raumfenster(n), Tür(en), im gewünschten Dekor usw..

Dies stellt den Anbieter häufig vor unlösbare Probleme, einerseits, weil die im Original teilweise schweren Möbel und Einrichtungen während einer Besprechung bzw. Besichtigung ausgetauscht, verschoben und evtl. anders gestaltet werden müßten, und andererseits, weil ein enormer Platzbedarf und Kostenaufwand erforderlich wäre, um möglichst alle oder zumindest die meisten oder gängigsten Variationen von Möbeln und Möbelteilen zur Verfügung zu haben.

Die herkömmlichen Unterlagen, die dem Kunden seine Kaufentscheidung erleichtern sollen, wie z.B. Verkaufsprospekte, Skizzen in Aufsicht, Seitenansicht oder in Perspektive, kleine Modelle, Videos, Computersimulationen und dergl. sind in vielen Fällen nicht ausreichend, um den Kunden bzw. die Kundin voll zu befriedigen, so daß gerade bei hochpreisigen Küchen oder Sonderwünschen der Berater zwar viele Variationen, aber nicht alle zur Ansicht bieten, und nur in Ausnahmefällen die Wunschküche in natura aus den vorhandenen Teilen und Möbeln zusammenstellen kann.

Aufgabe der Erfindung ist es, für den Berater oder Verkäufer eine Verkaufshilfe zu schaffen, die es ihm ermöglicht, dem Kunden oder Käufer seine Wunschvorstellung oder im Maßstab 1:1 unter möglichst naturgetreuen Bedingungen auf besonders einfache und kostengünstige Weise vorzustellen und mit minimalem Aufwand Änderungen, Umstellungen der Möbel, Möbelteile und Einrichtungsgegenstände und dergl. an der 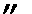 Traumküche" vorzunehmen.

Gemäß der Erfindung wird dies mit den Merkmalen des Kennzeichens des Anspruches 1 erreicht. Weitere Ausgestaltungen der Erfindung sind Gegenstand der Unteransprüche.

Mit der Erfindung wird vorgeschlagen, die Möbel und Möbelteile, Arbeitsplatten und dergl. von Einbauküchen in natürlicher Größe, natürlicher Form und natürlichem Dekor durch Attrappen aus Leichtmaterial, wie Pappe, Wellpappe, Kunststoff und dergl. (z.B. in Aluminium) naturgetreu nachzugestalten, und dabei die Attrappen mit extrem geringem Gewicht herzustellen, so daß der Berater die einzelnen Möbel und Möbelteile in beliebiger Weise und ohne Anstrengung gegeneinander austauschen, umsetzen und auch im Dekor nach den Vorstellungen des Kunden beliebig und praktisch ohne Zeitverlust verändern kann. Die Attrappen aus Pappe oder Wellpappe haben ein so geringes Gewicht, daß sie von einer Person ohne jede Anstrengung transportiert und zusammengesetzt werden können. Werden die Attrappen nicht benötigt, werden sie zusammengelegt und flach zum Aufbewahren an die Wand gelehnt oder auf den Boden gelegt. Die Sicht- bzw. Dekorflächen werden in der Weise den Vorstellungen und Wünschen des Kunden angepaßt, daß das jeweilige Dekor für das betreffende Möbelteil in Form einer Haftfolie, mittels Haftecken oder dergl. mit dem jeweiligen Möbelteil vorübergehend verbunden wird und auf extrem einfache Weise gegen eine andere Folie mit einem unterschiedlichen Dekor ausgewechselt werden kann. Des weiteren werden Folien verwendet, um Fensterattrappen, Türattrappen usw. darzustellen, so daß auf diese Weise der Küchenraum zuhause, in den die Küchenmöbel eingebaut werden sollen, simuliert werden kann.

Die Küchenmöbel bzw. Möbelteile werden als Attrappe in voller Größe 1:1 aufgestellt. Zum Aufbewahren nehmen die Attrappen in zusammengelegtem Zustand die Form eines zusammengelegten Quaders ein, der an zwei gegenüberliegenden Ecklinien gelenkartig ausgebildet ist. Die Gelenke sind die Knickstellen des Kartons, der Wellpappe oder dergl., wobei auch die Deckseite derartiger Möbel einklappbar ausgebildet ist. Anstelle solcher vertikaler Knicklinien können auch entsprechende Scharniere mit den Wandflächen verbunden sein, wenn erwünscht ist, daß die Attrappen eine sehr hohe Lebensdauer haben sollen.

Möbelteile mit Gerätefunktion, wie z.B. Elektroherd, Backofen, Grill, Waschmaschine, Geschirrspüler, Kühlschrank, Gefrierschrank oder dergl. werden durch entsprechende Dekorfolien ähnlich wie die Simulation von Fenstern und Türen dargestellt, so daß es auch hier auf einfache Weise möglich ist, den Kundenwünschen entsprechend derartige Gerätedarstellungen durch einfaches Lösen an einer Stelle und Festlegen an einer anderen Stelle ohne jeden zusätzlichen Aufwand zu vermitteln. In entsprechender Weise werden auch Spülen, Ablageflächen und dergl., wie auch Standflächen für elektrische Geräte, z.B. Kaffeemaschine, Toaster, usw., ferner Steckdosen und dergl. durch entsprechend ausgestaltete Folien dargestellt.

Zweckmäßigerweise werden die Möbel und Möbelteile nicht unmittelbar an der Wand des Ausstellungsraumes festgelegt, sondern an einer gesonderten Längs- und Querwand, die die beiden entsprechenden Seiten der einzurichtenden Küche zuhause darstellen (ggf. auch eine in Form eines U ausgestaltete Wandanordnung), so daß an einer derartigen Stellwand, die in sich versteift ist, die gesamten Möbel, Möbelteile und dergl. durch die weiter oben bereits beschriebenen Haftbänder oder ähnliche Befestigungsmittel, welche sowohl an den Stellwänden als auch an den Rückseiten der Möbel und Möbelteile angebracht sind, festgelegt. Diese Stellwände können auch dazu dienen, von der einen zur anderen Wand reichende Tragstäbe aufzunehmen, an denen beispielsweise Lampen, aber auch eine Dunstabzugshaube oder dergl. aufgehängt werden können.

Bei Einbauküchen sind die Stellflächen, Arbeitsflächen, Arbeitstische usw. in aller Regel nicht normiert, sondern haben von Küche zu Küche unterschiedliche Längenabmessungen. Damit bei dem Beratungsgespräch nicht eine Vielzahl von unterschiedlich langen Platten für die Ablageflächen bereit gestellt werden müssen, wird gemäß der Erfindung vorgeschlagen, Ablage- bzw. Stellflächen veränderbarer Länge vorzusehen, und zwar in Form eines Plattensystems, das aus zwei ineinandergreifenden Platten nach Art einer Streichholzschachtel besteht, wobei die die Streichhölzer aufnehmende schubladenförmige Schachtel die eine Platte und das hohlquaderförmige Außenteil die andere Platte darstellt. Beide Platten bestehen aus Pappe, Wellpappe, Kunststoff, wahlweise auch aus Holz oder Leichtmetall, und sind demgemäß mit geringer Dicke ausgebildet. Auf die Oberseite dieses Plattensystems wird ebenfalls eine Folie aufgeklebt, die der Oberseite der gewünschten Arbeitsfläche entspricht, so daß auch hier eine einfache und schnelle Auswechslung des Dekors möglich ist. Durch Bereitstellung unterschiedlicher Folien für die unterschiedlichen gängigen Dekors, verschiedene Arten von Naturholz, unterschiedlichste Farbgebungen für Kunststoffflächen, Abbildungen von Arbeitsstellen und -geräten usw. läßt sich jede Art von Dekor bzw. Abbildung simulieren, wobei die Lagerhaltung von Folien kaum Platz beansprucht.

Mit dem erfindungsgemäßen Vorschlag wird dem Berater bzw. Verkäufer eine Verkaufshilfe an die Hand gegeben, die ihm ermöglicht, mit einfachsten und billigsten Mitteln dem Kunden ein genaues Abbild seiner Küche zu vermitteln und beliebige Umstellungen in kürzester Zeit und mit einem Minimum an Mühe zu erreichen, so daß der Käufer tatsächlich an Ort und Stelle die Einbauküche sehen kann, die seiner Wunschvorstellung entspricht und in allen Einzelheiten dem Küchenraum zuhause nachgebildet sein kann.

Nachstehend wird die Erfindung in Verbindung mit der Zeichnung anhand eines Ausführungsbeispieles erläutert. Es zeigt:
- Fig. 1: einen Einzelhochschrank gemäß der Erfindung,
- Fig. 2: eine schematische Darstellung der Gelenklinien eines Möbelteiles, und zwar Fig. 2a in Schrägansicht die dreidimensionale, aufgeklappte Darstellung, und Fig. 2b die zusammengelegte Position,
- Fig. 3: eine Folie mit der Bilddarstellung der Frontseite eines Küchenherdes,
- Fig. 4: ein perspektivisches Bild einer Gesamteinbauküche in L-Form,
- Fig. 5: eine Methode der Befestigung der Attrappen-Schränke an der Stellwand,
- Fig. 6: die Rückseite einer Schrankattrappe mit Klettbändern, und
- Fig. 7: eine Darstellung der längenverstellbaren Arbeitsfläche auf einem Unterschrank.

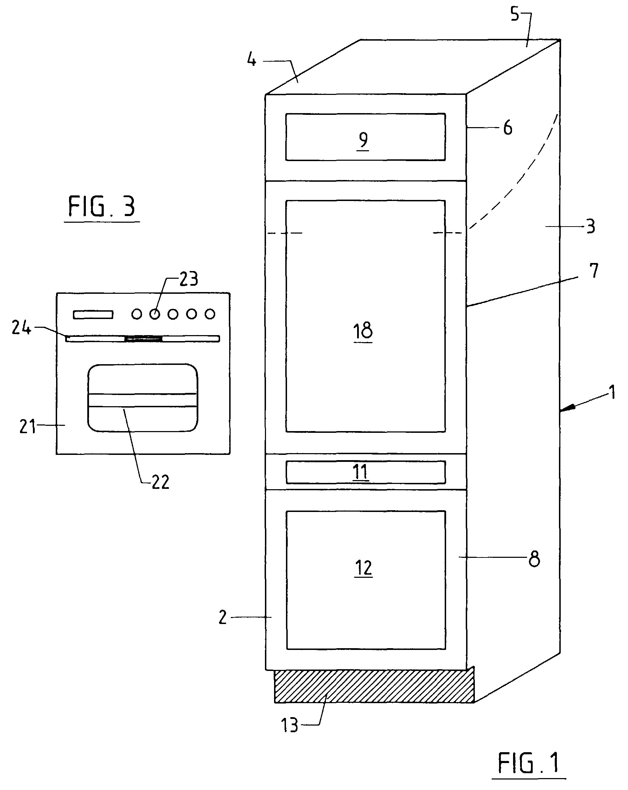

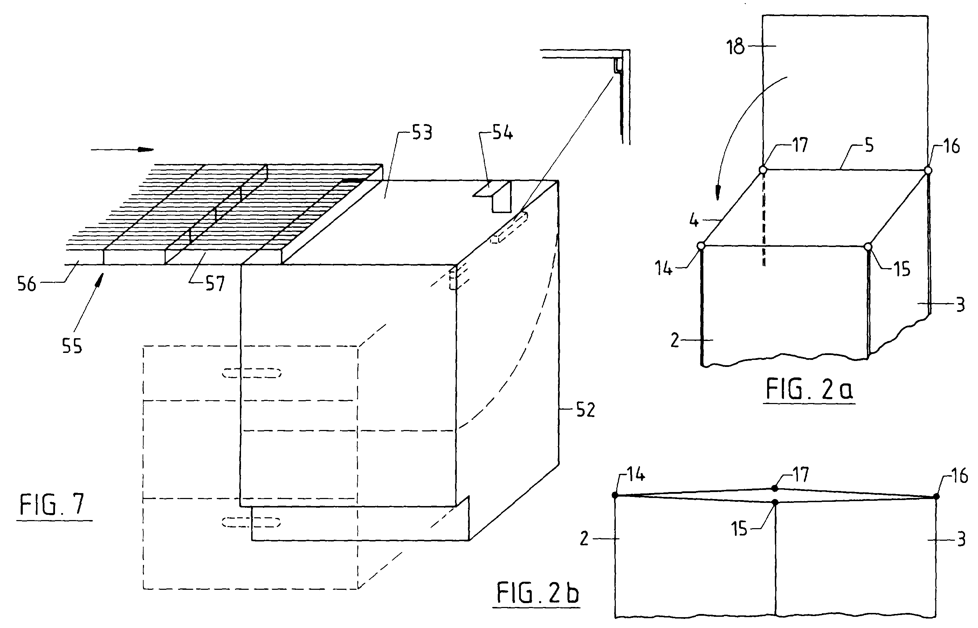

In Fig. 1 ist mit 1 ein eine Attrappe darstellender Einzelschrank schematisch dargestellt, der eine Frontfläche 2, Seitenflächen 3 und 4 sowie eine Rückseite 5 aufweist, und der aus einem Oberschrank 6, einem Mittelschrank 7 und einem Unterschrank 8 besteht. Die Frontfläche 2 weist Dekors 9, 10, 11, 12 sowie einen Sockel 13 auf. Die Wände des Schrankes 1 bestehen aus Karton, Pappe, Wellpappe, Kunststoff oder dergl., also aus einfachem, dünnem und leichtem Material. Die den Schrank bildenden Seitenflächen 2, 3, 4, 5 sind miteinander verbunden - sie bestehen vorzugsweise aus einem einstückigen Zuschnitt - und die vertikalen Verbindungskanten 14, 15, 16, 17 sind als Knicklinien, als Gelenklinien oder als Scharniere ausgebildet, so daß der quaderförmige Körper 1 über die Gelenklinien 14 - 16 zusammengefaltet werden kann, derart, daß die Gelenklinien 15 und 17 aufeinander zu verschoben werden und aus dem quaderförmigen Körper eine plattenförmiger Körper wird. In Fig. 2a ist mit 18 eine Deckfläche dargestellt, die den oben offenen Schrank 1 abdeckt. Die Deckwand 18 ist dabei mit der Rückwand 5 über eine Gelenklinie 19 verbunden, um die der Deckel 18 in Pfeilrichtung 20 nach vorne in die horizontale Position geschwenkt wird, in der er auf entsprechenden Anschlägen der vertikalen Schrankwände aufliegt, so daß der Schrank nach oben geschlossen ist.

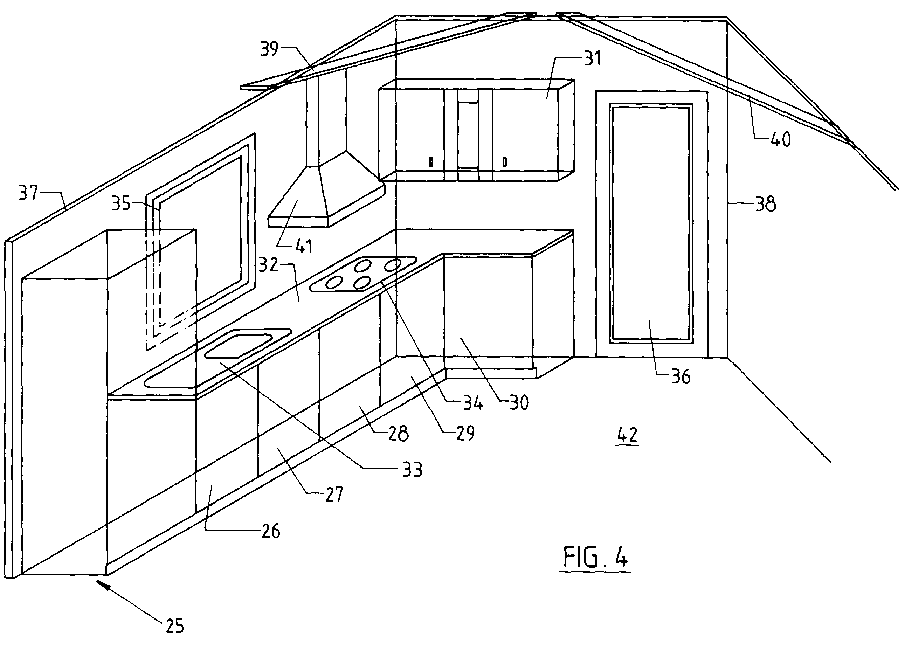

Fig. 3 zeigt eine Folie 21, die der Vorderwand des Unterschrankes 8 entsprechend dimensioniert ist und die ein Bild der Vorderseite eines Einbauherdes darstellt, und zwar mit der Sichtöffnung 22, den Schaltern 23 und dem Türbügel 24.

In Fig. 4 ist eine Ausführungsform einer gesamten Einbauküche schematisch dargestellt. An einen Hochschrank 25 schließen Unterschränke 26, 27, 28, 29 und 30 an. Über dem Unterschrank 30 ist ein Oberschrank 31 als Hängeschrank dargestellt. Die Unterschränke 26 - 30 weisen eine Abdeck- und Arbeitsfläche 32 auf, die durch aufgeklebte Folien 33 mit dem Bild einer Spüle, eines Kochfeldes usw. 34 dargestellt sind. Mit 35 ist ein Fenster angedeutet, das ebenfalls in Form einer aufgeklebten Folie simuliert wird. Gleiches gilt für die Tür 36. Mit 37 ist die Attrappe einer Raumwand (in L-Form) angedeutet, die freistehend aufgestellt oder mit der echten Raumwand befestigt sein kann, und an die die Schränke und Schrankteile angesetzt und auf die die Folien (Fenster und Tür) aufgeklebt sind. 38 bezeichnet eine weitere Wandattrappe, so daß zusammen mit der Wand 37 eine U-Raumform erhalten wird. Auf die Oberkante der Wände 37, 38 sind Träger 39 und 40 aufgelegt, die z.B. zur Aufnahme eines Modells einer Abzugshaube 41, von der Decke hängenden Leuchten und dergl. vorgesehen sind. Falls erwünscht, kann der Fußboden 42 durch eine Wechselfolie in beliebiger Gestaltung variiert werden, ebenso wie die Raumwände 37, 38 durch tapetenartige Folien passend zu den Sichtflächen der Möbel und Möbelteile gestaltet werden können.

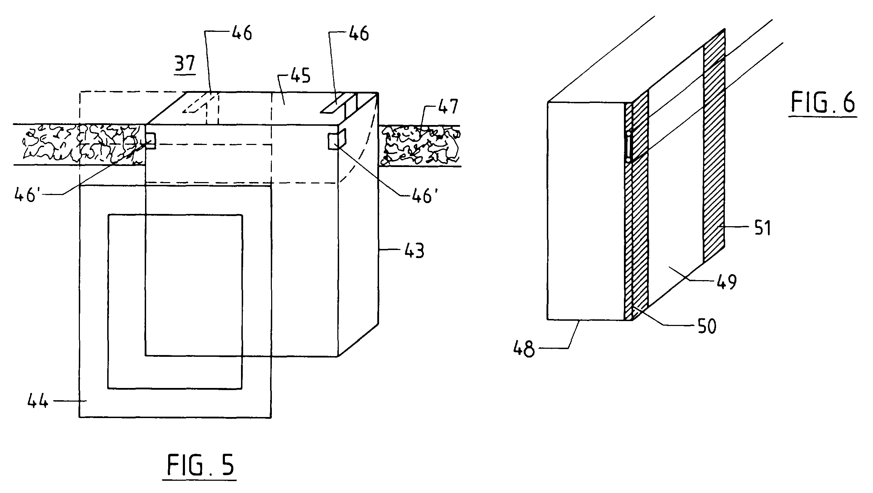

In Fig. 5 ist ein Oberschrank 43 dargestellt, dessen Vorderseite mit einer gestaltenden Folie 44 abgedeckt ist. 45 bezeichnet eine einklappbare Deckwand, die mit Hilfe von Klettbändern 46 mit der Rückwand des Möbelteiles 43 klappbar verbunden, oder aber einteilig mit der Rückwand aus Wellpappe oder dergl. ausgebildet und dann über die gemeinsame Knicklinie klappbar ist. Anschläge 46' begrenzen die Deckwand 45 in der eingeklappten horizontalen Position. 47 zeigt ein mit der Wandattrappe 37 verbundenes Klettband, mit dem ein entsprechendes Gegenband (nicht dargestellt) auf der Rückseite des Möbelteiles 43 befestigt ist. In Fig. 6 sind auf einem Möbelteil 48 bzw. dessen Rückseite 49 senkrecht angeordnete Klettbänder 50, 51 befestigt.

Die Ausbildung einer längenverstellbaren Arbeits- oder Stellfläche auf einem Unterschrank ist in Fig. 7 dargestellt. Der Unterschrank 52 weist eine Deckfläche 53 auf, die klappbar ausgebildet ist und die z.B. über Klettbänder 54 mit der Rückseite des Unterschrankes verbunden ist (wahlweise ist die Gelenkstelle als Faltlinie ausgebildet). Die attrappenförmige Arbeitsfläche 55 besteht aus einer Hohlplatte 56, deren Unterseite teilweise offen sein kann und die als Aufnahme und Führung für eine Platte 57 dient, die in Pfeilrichtung verschiebbar angeordnet ist, so daß damit eine beliebige Länge der Arbeitsfläche hergestellt werden kann, die millimetergenau auf die jeweiligen Gegebenheiten angepaßt werden kann.

## Patentansprüche

1. Vorrichtung zum Nachbilden von Möbeln, insbesondere Küchenmöbeln und Küchenmöbelteilen sowie zu ihrer Präsentation in einem Zimmer, **dadurch gekennzeichnet**, daß die Möbel bzw. Möbelteile, nämlich Schränke, Ober- und Unterschränke, Hängeschränke, Hochschränke und dergl., Einbaugeräte, Arbeitsplatten, usw. in Form, Aussehen und Abmessungen als den echten Möbeln entsprechende, individuelle, dreidimensionale, zusammenlegbare Attrappen ausgebildet sind.

2. Vorrichtung nach Anspruch 1, dadurch gekennzeichnet, daß die Möbel und Möbelteile aus Karton, Wellpappe, Kunststoff oder Kombinationen hiervon bestehen und daß zumindest die Sichtflächen der Möbel und Möbelteile mit abnehmbaren und wieder verwendbaren Papier- oder Kunststoffabdeckungen, z.B. Folien, versehen, z.B. beklebt sind.

3. Vorrichtung nach Anspruch 1 oder 2, dadurch gekennzeichnet, daß jeweils zwei aneinandergesetzte Möbelteile an den einander zugewandten Seitenflächen die Möbelteile miteinander verbindende, lösbare Haftelemente (z.B. Klettbänder) aufweisen.

4. Vorrichtung nach einem der Ansprüche 1 - 3, dadurch gekennzeichnet, daß die Rückseiten der Möbel bzw. Möbelteile und die zugeordnete Stellwand miteinander zusammenwirkende Haftelemente (z.B. Klettbänder) aufweisen.

5. Vorrichtung nach einem der Ansprüche 1 - 4, dadurch gekennzeichnet, daß die Möbel bzw. Möbelteile so aufgebaut sind, daß sie aus der dreidimensionalen Form in eine zweidimensionale, flache Form zusammenlegbar sind, derart, daß zwei diametral gegenüberliegende vertikale Ecklinien als Gelenklinien ausgebildet sind, zwei gegenüberliegende Gelenklinien aneinander gelegt werden und jeweils zwei benachbarte, aneinander anschließende Seitenwände die Breite der zusammengelegten Vorrichtung bilden.

6. Vorrichtung nach Anspruch 5, dadurch gekennzeichnet, daß die Oberseiten bzw. Deckseiten der Möbel bzw. Möbelteile als Klapptafeln oder wahlweise als aufschiebbar, auflegbare oder aufsteckbare Tafeln ausgebildet sind.

7. Vorrichtung nach einem der Ansprüche 1 - 6, dadurch gekennzeichnet, daß die Deckverbindungen Versteifungselemente, z.B. Versteifungswinkel aufweisen, die innen an die Seitenwände ansteckbar oder mit den Seitenwänden haftend (Klettverschluß, Klebeband) verbunden sind.

8. Vorrichtung nach einem der Ansprüche 1 - 7, dadurch gekennzeichnet, daß horizontale Arbeitsflächen als zwei relativ zueinander stufenlos in der Länge verstellbare, übereinander angeordnete Platten aus Pappe, Karton, Wellpappe, oder Kunststoff ausgebildet sind.

9. Vorrichtung nach Anspruch 8, dadurch gekennzeichnet, daß die beiden Platten schubladenartig relativ zueinander beweglich ausgebildet sind.
